# EUROPÄISCHE PATENTSCHRIFT

(11) **EP 2 514 661 B1**
(45) Veröffentlichungstag und Bekanntmachung des Hinweises auf die Patenterteilung: **11.12.2013**
(21) Anmeldenummer: 11003286.9
(22) Anmeldetag: 19.04.2011
(51) Int. Cl.: B62K 5/05, B62K 3/00, B62K 15/00

(54) **Dreirädriger Roller**
Three wheel roller
Rouleau à trois roues

(43) Veröffentlichungstag der Anmeldung: 24.10.2012
(73) Patentinhaber: Ascheberg, Tim, 24116 Kiel (DE); Jacobi, Jörn, 24112 Kiel (DE)
(72) Erfinder: Ascheberg, Tim, 24116 Kiel (DE); Jacobi, Jörn, 24112 Kiel (DE)
(74) Vertreter: Tönnies, Jan G.

(56) Entgegenhaltungen:
- DE-A1- 10 204 478
- DE-A1-102006 049 770
- DE-U1- 29 715 152
- FR-A1- 2 822 794

## Beschreibung

Die Erfindung betrifft einen Roller mit zwei Vorderrädern, einer die beiden Vorderräder miteinander verbindenden Vorderachse, eine auf der Vorderachse mittig aufstehenden, mit einem Lenker versehenen Lenkstange, einem an seiner vorderen Endseite mit der Vorderachse verbundenen Trittrahmen und einem an der anderen Endseite des Trittrahmens gelagerten Hinterrad, bei dem der Trittrahmen aus einem vorderen Rahmenteil und einem hinteren Rahmenteil besteht, die miteinander über ein Gelenk verbunden sind.

Ein derartiger dreirädriger Roller, der eine Umbildung des Rollers in eine Sackkarre (Trolley) erlaubt, ist aus der gattungsgemäßen DE 102 04 478 A1 bekannt, die DE 297 15 152 U1 zeigt einen durch Verschwenken des hinteren Teils um eine horizontale Achse verlaufendes Gelenk zu einer Sackkarre umzubildenden zweirädrigen Roller.

Bei diesem Roller ist das Problem der Anordnung des Hinterrades bei unter den vorderen Rahmenteil verschwenktem hinteren Rahmenteil nicht befriedigend gelöst.

Der Erfindung liegt die Aufgabe zugrunde, einen dreirädrigen Roller zu schaffen, bei dem das Hinterrad bei Umbildung zu einer Sackkarre dessen Funktion nicht störend angeordnet ist.

Erfindungsgemäß wird diese Aufgabe durch die Merkmale des Anspruchs 1 gelöst. Die Unteransprüche geben vorteilhafte Ausgestaltungen an.

Die Erfindung wird im Folgenden anhand einer Zeichnung erläutert. Dabei zeigt:
- Fig. 1: den dreirädrigen Roller bei einer Verwendung als solchen,
- Fig. 2: eine Stellung des Rollers bei hochgeklapptem Trittbrett,
- Fig. 3: eine Darstellung, die das Einschwenken des hinteren Rahmenteils zeigt,
- Fig. 4: den Roller kurz nach Abschluss des Umschwenkens des hinteres Rahmen-teils,
- Fig. 5: eine Darstellung des zu einer Sackkarre umgewandelten Rollers,
- Fig. 6: eine Darstellung, bei der der durch Einschieben der Längsstange benutzte Lenker auf dem Trittbrett aufliegt und bei dem die Räder abgenommen sind, wodurch der Roller in kompaktem Zustand einfach zu transportieren ist.

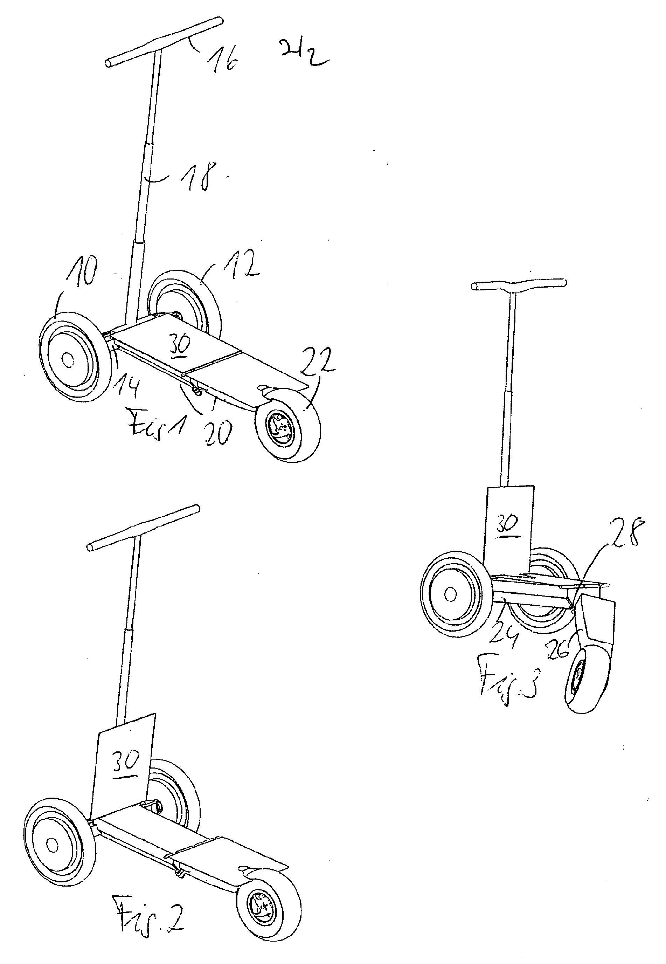

Der in Fig. 1 gezeigte dreirädrige Roller ist mit zwei Vorderrädern 10, 12 versehen, die miteinander durch eine Vorderachse 14 verbunden ist. Mittig auf der Vorderachse 14 steht eine Lenkachse 18 auf, die mit einem Lenker 16 versehen ist. Ein Trittrahmen 20 ist an seiner vorderen Endseite mit der Vorderachse 14 verbunden, die hintere Endseite des Trittrahmens lagert ein Hinterrad 22.

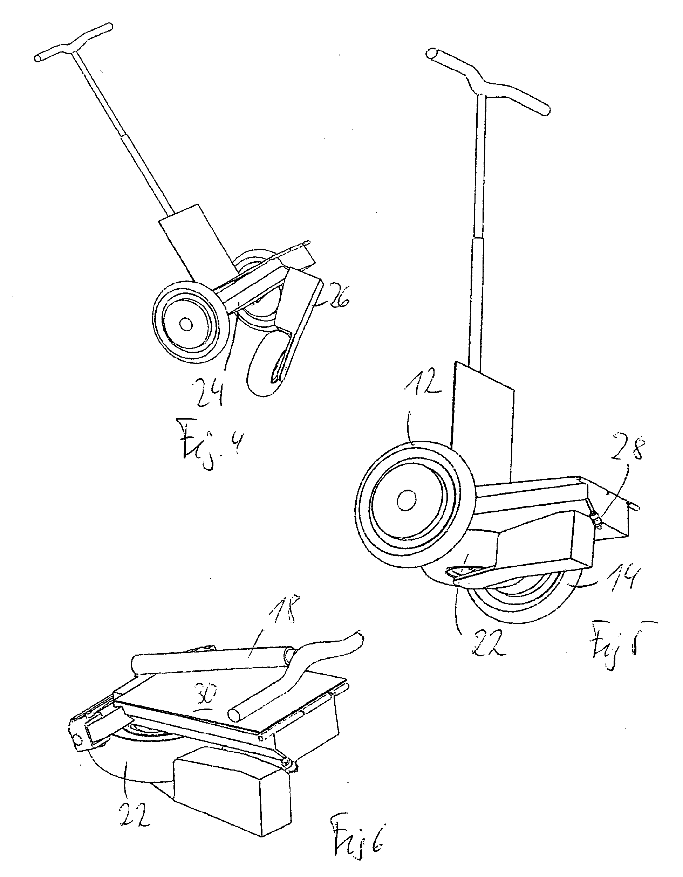

Der Trittrahmen 20 besteht aus einem vorderen Rahmenteil 24 und einem hinteren Rahmenteil 26, die miteinander über ein Gelenk 28 verbunden sind, das in der die beiden Rahmenteile 24, 26 trennenden horizontalen Ebene zur Vorderachse unter einen Schwenkwinkel von 45° verläuft und ein Verschwenken des hinteren Rahmenteils 26 um 180° unter das vordere Rahmenteil 24 erlaubt, wobei das Hinterrad bei einem solchen Verschwenken flach, also in einer zu der Ebene der Vorderachse parallelen Ebene liegt. Dieser Einschwenkvorgang wird in den Fig. 4 und 5 deutlich.

Bei unter den vorderen Rahmenteil verschwenktem Hinterrad (Fig. 6) und bei einem Hochschwenken des auf dem vorderen Rahmenteil 24 aufliegendem Trittbrett 30 um etwa 90° in Richtung auf die Lenkstange wird die in Fig. 6 gezeigte Sackkarre gebildet. Der das Hinterrad tragende hinteres Rahmenteil 26 bildet dabei die Aufstandfläche des zur Sackkarre gewandelten dreirädrigen Rollers.

Nicht dargestellt sind zum Verschwenken lösbare Mittel zum Verriegeln der Rahmenteile miteinander ist und ein auf die Vorderräder oder auf das Hinterrad wirkender motorischer Antrieb.

## Patentansprüche

1. Dreirädriger Roller mit zwei Vorderrädern (10, 12), eine die beiden Vorderräder (10, 12) miteinander verbindenden, verschwenkbaren Vorderachse (14), eine auf der Vorderachse (14) mittig aufstehenden, mit einem Lenker (16) versehenen Lenkstange (18), einem an seiner vorderen Endseite sich an der Vorderachse (14) abstützenden Trittrahmen (20) und einem an der anderen Endseite des Trittrahmens (20) gelagerten Hinterrad (22), bei dem der Trittrahmen (20) aus einem vorderen Rahmenteil (24) und einem hinter Rahmenteil(26) besteht, die miteinander über ein Gelenk (28) verbundenen sind, das eine Verschwenken des hinteren Rahmenteils des Trittrahmens unter den vorderen Rahmenteil (24) unter Umbildung des Rollers in eine Sackkarre erlaubt, **dadurch gekennzeichnet, dass** der Schenkwinkel des Gelenks (28) in der den vorderen Teil des Trittrahmens von dem hinteren Teil der Trittrahmens trennenden Ebene unter einem Winkel von 45° zur Längsrichtung des Trittrahmens (20) verläuft und ein Verschwenken des Hinterrahmens (26) um 180° unter den Vorderrahmen (24) erlaubt, bei dem das Hinterrad (22) flach zwischen den Vorderrädern (10, 12) unter dem Vorderrahmen (24) liegt.

2. Roller nach Anspruch 1, **gekennzeichnet durch** einen auf dem vorderen Rahmenteil (24) aufliegenden Trittbrett (26), das zu diesem um einen Winkel 90° in Richtung auf die Lenkstange (18) verschwenkbar ist.

3. Roller nach Anspruch 1 oder 2, **gekennzeichnet durch** einen auf die Vorderräder (10, 12) oder das Hinterrad (22) wirkenden motorischen Antrieb.

4. Roller nach einem der vorangehenden Ansprüche, **dadurch gekennzeichnet, dass** die Lenkstange (18) längenvariabel ausgebildet ist.

5. Roller nach einem der vorangehenden Ansprüche, **dadurch gekennzeichnet, dass** der hintere Rahmenteil (26) in unter den vorderen Rahmenteil (24) verschwenktem Zustand eine Aufstandfläche der so gebildeten Sackkarre darstellt.

## Claims

1. A three-wheeled roller having two front wheels (10, 12), a pivotable front axle (14) connecting the two front wheels (10, 12) to one another, a handle bar (18) that stands centrally on the front axle (14) and is provided with a handle (16), a step frame (20) supported at its front end side on the front axle (14), and a rear wheel (22) mounted at the other end side of the step frame (20), where the step frame (20) consists of a front frame part (24) and a rear frame part (26) that are connected to one another by a hinge (28) that allows pivoting of the rear part frame of the step frame underneath the front frame part (24) while converting the roller into a sack cart, **characterized in that** the pivot angle of the hinge (28), in the plane separating the front part of the step frame from the rear part of the step frame, runs at an angle of 45° relative to the longitudinal direction of the step frame (20) and allows pivoting the rear frame (26) about 180° underneath the front frame (24), where the rear wheel (22) lies flat between the front wheels (10, 12) below the front frame (24).

2. The roller according to Claim 1, **characterized by** a step board (26) that rests on the front frame part (24) and can be pivoted relative thereto about an angle of 90° into the direction towards the handle bar (18).

3. The roller according to Claim 1 or 2, **characterized by** a motive drive acting on the front wheels (10, 12) or the rear wheel (22).

4. The roller according to one of the preceding claims, **characterized in that** the handle bar (18) is designed to be variable in terms of its length.

5. The roller according to one of the preceding claims, **characterized in that** the rear frame part (26), in the state pivoted underneath the front frame part (24), represents the contact area of the sack cart thus formed.

## Revendications

1. Trottinette à trois roues, dotée de deux roues avant (10, 12), d'un essieu pivotant reliant (14) entre elles les deux roues avant (10, 12), d'une barre directrice (18) dotée d'un guidon (16) et située au milieu de l'essieu avant (14), d'un cadre (20) soutenu par l'essieu avant (14) et d'une roue arrière (22) située à l'autre extrémité du cadre (22), et dont le cadre (20) se compose d'une partie avant (24) et d'une partie arrière (26) reliées entre elles par une articulation (28) permettant de faire pivoter la partie arrière du cadre jusque sous la partie avant (24) afin de transformer la trottinette en diable, **caractérisé en ce que** l'angle de pivotement de l'articulation (28) grâce au fait que la surface séparant la partie avant du cadre de la partie arrière du cadre dans un angle horizontal de 45° par rapport au cadre (20) et permettant un pivotement du cadre arrière (26) de 180° jusque sous le cadre avant (24), la roue arrière (22) se plaçant alors à plat entre les roues avant (10, 12) sous le cadre avant (24).

2. Trottinette selon la revendication 1, **caractérisée par** une planche (26) située sur le cadre avant (24), pivotable vers celui-ci à un angle de 90° vers la barre directrice (18).

3. Trottinette selon la revendication 1 ou 2, **caractérisée par** un entraînement motorisé agissant sur les roues avant (10, 12) ou sur la roue arrière (22).

4. Trottinette selon une des revendications ci-dessus, **caractérisée en ce que** la barre directrice (18) est de longueur adaptable.

5. Trottinette selon une des revendications ci-dessus, **caractérisée en ce que** la partie arrière du cadre (26), lorsqu'elle est pivotée sous la partie avant du cadre (24), sert de surface de contact au diable.
